# FASCICULE DE BREVET EUROPEEN

(11) **EP 0 721 136 B1**
(45) Date de publication et mention de la délivrance du brevet: **23.07.2003**
(21) Numéro de dépôt: 96400012.9
(22) Date de dépôt: 03.01.1996
(51) Int. Cl.: G02F 1/13

(54) **Dispositif de mesure colorimétrique d'un écran d'affichage**
Farbmessvorrichtung für einen Anzeigeschirm
Colorimetric measuring device for a display screen

(30) Priorité: 06.01.1995 FR 9500118
(43) Date de publication de la demande: 10.07.1996
(73) Titulaire: ELDIM, 14200 Herouville Saint-Clair (FR)
(72) Inventeur: Leroux, Thierry, F-14150 Oustreham (Calvados) (FR)
(74) Mandataire: Cabinet HERRBURGER

(56) Documents cités:
- EP-A- 0 286 529
- DE-A- 2 952 154
- PROCEEDINGS OF THE SID, vol. 32, no. 3, 1991 pages 207-211, XP 000288386 FRITSCH M W ET AL 'FASTER CONTRAST MEASUREMENT OF LCDS WITH IMPROVED CONOSCOPIC METHODS'

## Description

La présente invention concerne un dispositif de mesure colorimétrique d'un écran d'affichage notamment d'un écran à cristaux liquides, pour déterminer la luminance et les coordonnées colorimétriques d'une surface élémentaire de l'écran suivant la direction d'observation de cette surface élémentaire,
dispositif comprenant :
- un premier objectif convergent formant l'image de la transformée de Fourier de la surface élémentaire dans son plan focal image,
- un second objectif convergent projetant l'image de la transformée sur un capteur formé d'un ensemble de détecteurs répartis suivant une matrice, chaque détecteur donnant un signal électrique proportionnel à l'intensité lumineuse de la surface élémentaire,
- un diaphragme situé sur le passage des faisceaux lumineux pour définir l'ouverture de la surface élémentaire,
- un circuit de traitement du signal électrique produit par chaque détecteur du capteur pour déterminer le contraste.

On connaît déjà un tel dispositif selon le document EP-A-0 286 529.

De manière générale, les caractéristiques des écrans d'affichage quelle que soit leur structure et en particulier les écrans d'affichage à cristaux liquides ont une lisibilité qui varie très fortement en fonction de la direction d'observation. Cette caractéristique correspond au contraste, rapport entre l'état éclairé et l'état non éclairé des surfaces élémentaires de l'écran.

Pour apprécier la qualité d'un écran on a développé une technique de mesure du contraste suivant la direction d'observation et il est connu de tracer ainsi des courbes correspondant à un même contraste (courbes d'isocontraste). De telles analyses sont indispensables aux fabricants d'écrans pour surveiller la qualité de leur produit tant en cours de fabrication qu'au stade final. Ces analyses permettent également la comparaison entre différentes fabrications.

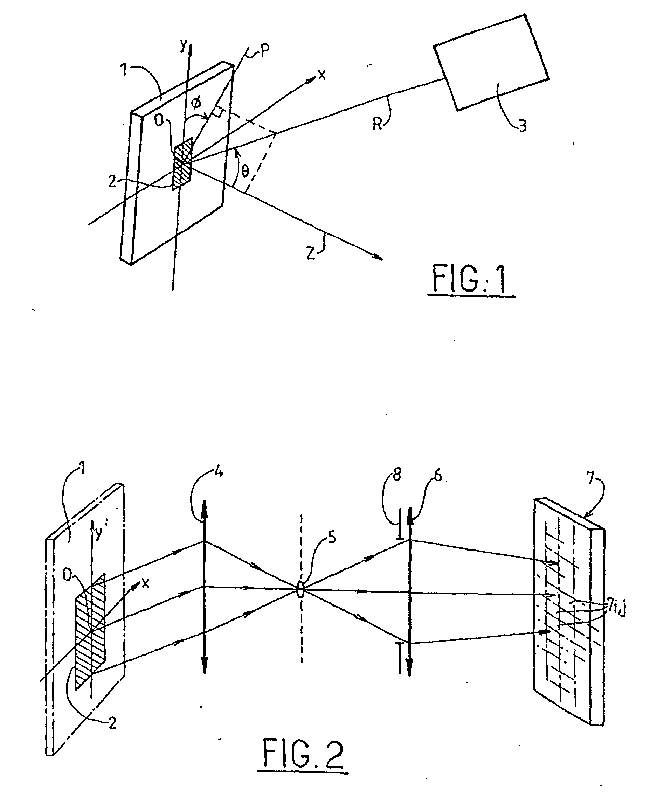

Le principe connu de la mesure du contraste d'un écran est illustré à la figure 1. Selon ce principe, pour mesurer le contraste d'un écran 1, on analyse le contraste des surfaces élémentaires 2 dont un exemple est représenté.

Cette analyse se fait pour chaque surface élémentaire 2.

Pour cela on a tracé les axes de coordonnées XY dans le plan de l'écran 1. La normale au centre O de la surface élémentaire 2 est l'axe Z.

Un récepteur photosensible 3 est dirigé sur la surface élémentaire 2 et analyse l'image à l'état affiché et à l'état non affiché de cette surface pour en mesurer le contraste, c'est-à-dire le rapport de ces deux grandeurs, associé à une orientation donnée du récepteur.

On définit les directions de mesure par le récepteur 3 représenté schématiquement, par deux angles, à savoir, d'une part, l'angle que fait le rayon R issu du point O et tombant sur le récepteur 3, avec la normale Z. Cet angle est appelé θ.

On définit également l'angle d'orientation autour de l'axe Z, c'est-à-dire l'angle que fait le plan passant par le rayon R et l'axe Z avec une direction de référence par exemple la direction OY. Cet angle est appelé ϕ.

La mesure du contraste de l'élément de surface 2 consiste à faire de multiples mesures en modifiant l'angle θ dans le plan ZOP, l'angle ϕ restant constant. Puis on change l'angle ϕ et on répète les opérations.

En application du principe exposé ci-dessus, anciennement, les mesures se faisaient avec une installation comprenant un photorécepteur 3 aligné sur le centre O et mobile sur une surface sphérique de centre O pour faire les analyses suivant les différents angles θ, ϕ.

Lorsque toutes les mesures étaient faites pour une surface élémentaire 2, on déplaçait l'écran 1 pour placer au centre de visée O, une nouvelle surface élémentaire et on recommençait les différentes mesures.

Ces moyens fastidieux ont été remplacés par le dispositif de mesure défini ci-dessus dans le document EP-A-0 286 529.

Selon le principe développé dans ce document on fait une mesure globale avec un capteur formé d'éléments détecteurs répartis suivant une matrice. Chaque élément détecteur est associé de manière biunivoque par le système optique à une direction d'émission (un couple d'angles ϕ, θ).

Ce principe de mesure permet ainsi une mesure en une seule fois du contraste dans toutes les directions pour une surface élémentaire. La résolution de la mesure, c'est-à-dire le nombre de couples d'angles (θ, ϕ) pour lesquels se fait la mesure dépend du nombre d'éléments détecteurs du capteur.

Toutefois les qualités d'un écran d'affichage ne dépendent pas uniquement du contraste entre l'état affiché et l'état non affiché de la surface élémentaire, mais également des couleurs de cette surface élémentaire dans son état affiché et son état non affiché.

La présente invention a pour but de créer un dispositif de mesure colorimétrique d'un écran d'affichage, notamment d'un écran d'affichage à cristaux liquides.

A cet effet, l'invention concerne un dispositif de mesure correspondant au type défini ci-dessus, caractérisé en ce que le second objectif est un système optique comprenant, dans le sens du cheminement des faisceaux :
- un objectif d'entrée,
- un filtre de couleurs,
- un objectif de sortie,
- l'objectif d'entrée, situé après le plan image du premier objectif, transformant les faisceaux convergents en des faisceaux parallèles pour traverser le filtre de couleurs,
- le filtre de couleurs étant formé d'un ensemble de filtres associés à chaque couleur analysée et qui peuvent être placés sur commande dans le chemin des faisceaux lumineux à la sortie de l'objectif d'entrée,
- l'objectif de sortie, situé en aval du filtre de couleurs recevant les faisceaux parallèles sortant du filtre pour les focaliser sur les détecteurs du capteur, et
- le circuit de traitement des signaux du capteur commande la commutation des filtres de couleurs pour l'analyse des différentes couleurs et le traitement des signaux respectifs en fonction de leur enregistrement et/ou affichage.

Le dispositif selon l'invention permet d'analyser automatiquement un écran d'affichage suivant les différentes couleurs. A chaque couleur est associé un système de pondération des signaux fournis par le capteur pour donner une carte colorimétrique de l'écran avec des zones ou des courbes d'isocontraste associées à chaque couleur. La pondération des signaux associés à chaque couleur peut se faire suivant la perception physiologique de chaque couleur.

Suivant une autre caractéristique de l'invention le dispositif comprend un diaphragme délimitant l'image de la surface élémentaire analysée, ce diaphragme étant placé en amont de l'objectif de sortie du système optique.

Suivant une autre caractéristique de l'invention le dispositif comprend une lame semi-transparente placée entre le diaphragme et l'objectif de sortie pour prélever une fraction des faisceaux lumineux et imager la zone de mesure par un objectif de transport et un oculaire.

En formant l'image de la surface analysée il est possible d'examiner cette image à travers l'oculaire ou de la projeter sur une surface d'affichage pour l'enregistrer ou l'étudier.

La présente invention sera décrite ci-après de manière plus détaillée à l'aide des dessins annexés dans lesquels :
- la figure 1 est un schéma du principe d'analyse d'une surface d'affichage,
- la figure 2 est un schéma de l'installation de mesure de contraste selon l'art antérieur,
- la figure 3 est un schéma du dispositif de mesure colorimétrique d'un écran d'affichage selon l'invention.

Selon la figure 2, l'installation connue, destinée à mesurer le contraste de l'écran 1, en analysant successivement les différentes surfaces élémentaires 2, comprend un premier objectif 4 donnant une image 5 de la surface élémentaire 2. Cette image est la transformée de Fourier de cette surface. Un second objectif 6 reprend cette image 5 et la projette sur le capteur 7 formé d'éléments détecteurs 7i,j de coordonnées Xi, Yj dans le plan du capteur 7. Chaque élément de détecteur 7i,j est associé de manière biunivoque à une direction de faisceau lumineux émis par la surface élémentaire 2.

Le second objectif 6 est précédé d'un diaphragme 8 qui détermine la dimension de la surface élémentaire 2.

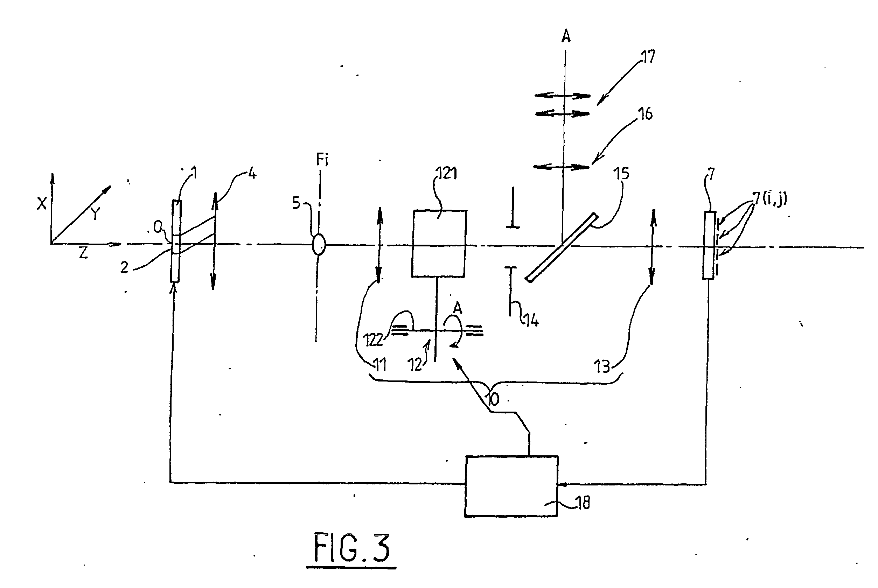

Le dispositif de mesure colorimétrique selon l'invention (figure 3) se compose d'un premier objectif 4 qui forme de la surface élémentaire 2 de l'écran 1, l'image 5 de la transformée de Fourier optique de cette surface dans son plan focal image (Fi). Cette image 5 est reprise par un système optique 10 qui la projette sur un capteur 7 formé d'éléments de détecteur (7i,j) répartis en une matrice comme les éléments 7i,j de la figure 2.

Le système optique 10 se compose d'un objectif d'entrée 11, d'un filtre de couleurs 12 et d'un objectif de sortie 13. L'objectif d'entrée 11 reprend les faisceaux de l'image 5 pour les transformer en faisceaux parallèles destinés au filtre 12. En sortie du filtre 12 les faisceaux parallèles sont repris par l'objectif de sortie 13 qui les focalise sur les éléments de détecteur (7i,j) du capteur 7.

Le filtre de couleurs 12 est en fait constitué par plusieurs lames de couleurs 121 qui peuvent être placées une à une dans le chemin lumineux entre les objectifs 11 et 13 pour filtrer les faisceaux lumineux suivant la couleur.

Comme cela est représenté schématiquement, ces lames de couleurs 121 sont placées sur un élément mobile, par exemple un disque tournant autour de son axe 122 (flèche A) pour placer successivement ou en fonction de la couleur choisie, le filtre approprié dans le chemin des faisceaux lumineux.

L'objectif de sortie 13 est précédé par un diaphragme 14 qui définit la surface analysée, c'est-à-dire que l'ouverture de ce diaphragme 14 est choisie en fonction de l'élément de surface 2 analysé.

Ce diaphragme 14 et l'élément de surface 2 sont conjugués optiquement, c'est-à-dire qu'une image de la surface 2 se forme dans le plan du diaphragme 14.

Selon l'invention, en aval du diaphragme 14 le dispositif comporte une lame semi-transparente 15 qui dévie une fraction de la lumière à travers un objectif de transport 16 et un oculaire 17 permettant d'examiner visuellement l'image de l'élément de surface. Cela permet également de projeter cette image sur un écran ou un système d'imagerie.

L'installation comprend également un circuit de traitement 18 qui traite les signaux des éléments de détecteur du capteur 7 et commande la séquence des opérations, c'est-à-dire la mise en place, par exemple par rotation, indexée des filtres 121 et le déplacement de l'écran 1 pour mettre en position d'analyse successivement chaque élément de surface 2.

Le circuit de traitement 18 assure le balayage du capteur 7 pour recevoir et traiter les signaux associés à chaque élément de détecteur (7i,j) et compenser ces signaux en fonction de l'étalonnage du système ; ces compensations dépendent de la transmission du système optique suivant l'angle ou la nature des filtres utilisés. Les données obtenues pour le contraste ou la colorimétrie sont enregistrés en vue de leur exploitation, soit par affichage, soit par tracé de cartes de contraste ou de colorimétrie.

## Revendications

1. Dispositif de mesure colorimétrique d'un écran d'affichage notamment d'un écran à cristaux liquides, pour déterminer la luminance et les coordonnées colorimétriques d'une surface élémentaire de l'écran suivant la direction d'observation de cette surface élémentaire, dispositif comprenant :
- un premier objectif convergent (4) formant l'image (5) de la transformée de Fourier de la surface élémentaire (2) dans son plan focal image (Fi),
- un second objectif convergent (10) projetant l'image de la transformée sur un capteur formé d'un ensemble de détecteurs (7i, j) répartis suivant une matrice, chaque détecteur donnant un signal électrique proportionnel à l'intensité lumineuse de la surface élémentaire (2),
- un diaphragme situé sur le passage des faisceaux lumineux pour définir l'ouverture de la surface élémentaire,
- un circuit de traitement (18) du signal électrique produit par chaque détecteur (7i, j) du capteur pour déterminer le contraste,
dispositif de mesure **caractérisé en ce que** le second objectif (10) est un système optique comprenant, dans le sens du cheminement des faisceaux :
- un objectif d'entrée (11),
- un filtre de couleurs (12),
- un objectif de sortie (13),
- l'objectif d'entrée (11), situé après le plan image (Fi) du premier objectif (1), transformant les faisceaux convergents en des faisceaux parallèles pour traverser le filtre de couleurs (12),
- le filtre de couleurs (12) étant formé d'un ensemble de filtres (121) associés à chaque couleur analysée et qui peuvent être placés sur commande dans le chemin des faisceaux lumineux à la sortie de l'objectif d'entrée (11),
- l'objectif de sortie (13), situé en aval du filtre de couleurs (12) recevant les faisceaux parallèles sortant du filtre pour les focaliser sur les détecteurs (7i, j) du capteur (7), et
- le circuit de traitement (18) des signaux du capteur (7) commande la commutation des filtres de couleurs (121) pour l'analyse des différentes couleurs et le traitement des signaux respectifs en fonction de leur enregistrement et/ou affichage.

2. Dispositif selon la revendication 1, **caractérisé en ce qu'**il comprend un diaphragme (14) conjugué optique de la surface élémentaire (2) et délimitant l'image de la surface élémentaire (2) analysée, ce diaphragme étant placé en amont de l'objectif de sortie (13) du système optique (10).

3. Dispositif selon les revendications 1 et 2, **caractérisé en ce qu'**il comprend une lame semi-transparente (15) pour prélever une fraction des faisceaux lumineux et imager la zone de mesure par un objectif de transport (16) et un oculaire (17).

4. Dispositif selon la revendication 3, **caractérisé en ce que** la lame semi-transparente est placée entre le diaphragme (14) et l'objectif de sortie (13).

## Patentansprüche

1. Farbmessvorrichtung für einen Anzeigebildschirm, insbesondere für einen Flüssigkristallbildschirm, zum Ermitteln der Leuchtdichte und der Farbmesskoordinaten einer Elementarfläche des Bildschirms entsprechend der Betrachtungsrichtung dieser Elementarfläche mit:
- einem ersten konvergierenden Objektiv (4), das das Bild (5) der Fourier-Transformation der Elementarfläche (2) in seiner Bildfokalebene (Fi) erzeugt,
- einem zweiten konvergierenden Objektiv (10), das das Bild der Transformation auf einen von einem Satz in Matrixform verteilter Sensoren (7i, j) gebildeten Messwertgeber projiziert, wobei jeder Sensor ein zur Leuchtintensität der Elementarfläche (2) proportionales elektrisches Signal abgibt,
- einer Blende, die in der Bahn der leuchtenden Strahlen gelegen ist, um die Weite der Elementarfläche zu definieren,
- eine Schaltung (18) zur Auswertung des von jedem Sensor (7i, j) des Messwertgebers erzeugten elektrischen Signals zur Ermittlung des Kontrastes,
wobei die Messvorrichtung **dadurch gekennzeichnet ist, dass** das zweite Objektiv (10) ein optisches System ist mit in Richtung des Verlaufs der Strahlen:
- einem Eintrittsobjektiv (11),
- einem Farbfilter (12),
- einem Austrittsobjektiv (13),
- wobei das sich hinter der Bildebene (Fi) des ersten Objektivs (1) gelegene Eintrittsobjektiv (11) die konvergierenden Strahlen zum Durchqueren.des Farbfilters (12) in parallele Strahlen umwandelt,
- der Farbfilter (12) von einem Satz Filter (121) gebildet ist, die mit jeder analysierten Farbe zusammenwirken und die durch einen Steuerungsbefehl in die Bahn der leuchtenden Strahlen am Ausgang des Eintrittsobjektivs (11) platziert werden können,
- das Austrittsobjektiv (13), das dem Farbfilter (12) nachgeordnet ist, die den Filter verlassenden parallelen Strahlen empfängt, um sie auf die Sensoren (7i, j) des Messwertgebers (7) zu bündeln, und
- die Schaltung (18) zur Auswertung der Signale des Messwertgebers (7) die Kommutierung der Farbfilter (121) für die Analyse der verschiedenen Farben und die Auswertung der jeweiligen Signale in Abhängigkeit von ihrer Erfassung und/oder Anzeige steuert.

2. Vorrichtung nach Anspruch 1, **dadurch gekennzeichnet, dass** sie eine mit der Elementarfläche(2) optisch gekoppelte Blende (14) aufweist, die das Bild der analysierten Elementarfläche (2) begrenzt, wobei diese Blende dem Austrittsobjektiv (13) des optischen Systems (10) vorgeordnet ist.

3. Vorrichtung nach einem der Ansprüche 1 oder 2, **dadurch gekennzeichnet, dass** sie ein halbtransparentes Plättchen (15) aufweist, um einen Bruchteil der leuchtenden Strahlen abzulenken und den Messbereich durch ein Übertragungsobjektiv (16) und ein Okular (17) bildlich darzustellen.

4. Vorrichtung nach Anspruch 3, **dadurch gekennzeichnet, dass** dass das halbtransparente Plättchen zwischen der Blende (14) und dem Austrittsobjektiv (13) angeordnet ist.

## Claims

1. Colorimetric measuring device for a display screen, in particular a liquid crystal display screen, for determining the luminance and the colorimetric co-ordinates of an element surface of the screen according to the viewing direction of this element surface, the device comprising:
- a first convergent objective lens (4), forming the image (5) of the Fourier transformation of the element surface (2) in its image focal plane (Fi),
- a second convergent objective lens (10), projecting the image of the transformation onto a sensor formed by an assembly of detectors (7i, j), which are distributed according to a matrix, each detector producing an electrical signal proportional to the luminous intensity of the element surface (2),
- a diaphragm situated along the path of the luminous beams for defining the opening of the element surface,
- a processing circuit (18) for the electrical signal produced by each detector (7i, j) of the sensor for determining the contrast,
which measuring device is **characterised in that** the second objective lens (10) is an optical system comprising, in the direction of travel of the beams:
- an inlet objective lens (11),
- a colour filter (12),
- an outlet objective lens (13),
- the inlet objective lens (11), which is located after the image plane (Fi) of the first objective lens (1), converting the convergent beams into parallel beams in order to pass through the colour filter (12),
- the colour filter (12) being formed by an assembly of filters (121) which are associated with each colour analysed and which can be placed as required in the path of the luminous beams at the outlet of the inlet objective lens (11),
- the outlet objective lens (13), which is located downstream of the colour filter (12), receiving the parallel beams exiting the filter in order to focus them on the detectors (7i, j) of the sensor (7), and
- the processing circuit (18) for the signals of the sensor (7) controls the commutation of the colour filters (121) for the analysis of the different colours and the processing of the respective signals according to their recording and/or display.

2. Device according to claim 1, **characterised in that** it comprises a diaphragm (14) which is optically conjugated with the element surface (2) and which delimits the image of the element surface (2) analysed, this diaphragm being placed upstream of the outlet objective lens (13) of the optical system (10).

3. Device according to claims 1 and 2, **characterised in that** it comprises a semi-transparent plate (15) for removing a fraction of the luminous beams and imaging the measuring zone by means of a transport objective lens (16) and an eyepiece (17).

4. Device according to claim 3, **characterised in that** the semi-transparent plate is placed between the diaphragm (14) and the outlet objective lens (13).
